# EUROPEAN PATENT APPLICATION

(11) **EP 1 738 997 A2**
(43) Date of publication of application: **03.01.2007**
(21) Application number: 06013263.6
(22) Date of filing: 27.06.2006
(51) Int. Cl.: B62D 35/00, B62D 37/00

(54) **Vehicle rear body structure**

(30) Priority: 27.06.2005 JP 2005186431; 05.07.2005 JP 2005195700; 05.07.2005 JP 2005195699
(71) Applicant: Mazda Motor Corporation, Aki-gun, Hiroshima 730-8670 (JP)
(72) Inventor: Fukushima, Yoshio, Aki-gun Hiroshima 730-8670 (JP); Okamoto, Satoshi, Aki-gun Hiroshima 730-8670 (JP); Okada, Yoshihiro, Aki-gun Hiroshima 730-8670 (JP)
(74) Representative: Müller-Boré & Partner Patentanwälte

(57) **Abstract**

The vehicle rear body structure comprises the roof 2 having the roof base shape α in the convex shape, the roof concave portion 4 enclosed by length L extending longitudinally and the width W extending laterally, the concave portion being located at the lower level than the roof base shape α, and the rear hatch 3 with the shoulder portions 20, 21 located substantially at the same level as the roof base shape α and the concave portion 22 located at the level lower than the shoulder portions 20, 21 and at the same level as the concave portion 4. The roof concave portion 4 goes down rearward such that its height becomes lower from its front end portion toward the rear end portion. The roof-rear-end air flow passage 26 extending longitudinally from the concave portion 4 to the concave portion 22 is provided.

## Description

The present invention relates to a vehicle rear body structure of a hatch-back type of a vehicle equipped with a rear hatch that is provided at a rear portion of a roof panel to be opened substantially upward.

Generally, designing a vehicle with a lower air resistance coefficient Cd can reduce an air resistance force that the vehicle receives, and it is known that a design of the vehicle whose rear part is formed to gradually shrink can provide a smooth air flow, thereby reducing the air resistance coefficient Cd.

Further, it is also known that a vehicle roof with a downward cut part, whose rear part is formed to be inclined downward (preferably, with an angle of 10 degrees), which is disclosed in Japanese Patent Laid-Open Publication No. 2002-120769, can function appropriately in reducing the air resistance coefficient Cd.

Herein, in a case where the above-described slant downward cut part is formed over an entire width of the rear roof portion and thereby the vehicle is designed such that a whole part of the roof rear end goes down, the vehicle could be superior from the air resistance coefficient Cd aspect. However, an exterior design of the vehicle would deteriorate somewhat, so such a vehicle would have a problem in a vehicle design.

The present invention has been devised in view of the above-described problem, and an object of the present invention is to provide a vehicle rear body structure that can provide a better exterior design of vehicle and a properly smooth air flow with a smaller air resistance.

This object is solved by a vehicle rear body structure according to the present invention of claim 1. Preferred embodiments of the present invention are subject of the dependent claims.

According to the present invention, there is provided a vehicle rear body structure of a hatch-back type of vehicle, comprising a vehicle roof having a roof base shape that is substantially formed in a convex shape, whose central part preferably protrudes upward slightly over at least part of, preferably over a substantially entire longitudinal direction or extension thereof so as to have a gentle arc shape when viewed from back of the vehicle, at least one concave portion formed at a roof rear intermediate portion (preferably substantially a roof rear central portion) of the vehicle roof, the concave portion being disposed so as to be enclosed by a specified (predetermined or predeterminable) length extending forward from a rear end of the vehicle roof and a specified (predetermined or predeterminable) width extending substantially in a vehicle width direction preferably with a center thereof substantially located at a vehicle center, the concave portion being located at a lower level or height than the roof base shape, a rear hatch provided so as to be opened and closed, whose upper end portion having right and left shoulder portions that are located substantially at the same level or height as the base shape of a rear end portion of the vehicle roof in a closed state thereof and a concave portion that is formed at an intermediate portion (preferably a substantially central portion) thereof and/or is located at a level or height lower than the shoulder portions and substantially at the same level or height as the concave portion formed at the vehicle roof rear intermediate (central) portion of the vehicle roof in the closed state thereof, wherein the concave portion of the vehicle roof is formed so as to go down rearward in such a manner that its height becomes lower from a front end portion thereof toward a rear end portion thereof, and there is provided a roof-rear-end air flow passage that extends longitudinally from the concave portion of the vehicle roof towards or substantially to the concave portion of the rear hatch.

According to the above-described structure, the concave portion of the vehicle roof is disposed so as to be enclosed by the specified (predetermined or predeterminable) length extending forward from back of the vehicle end of the vehicle roof and the specified (predetermined or predeterminable) width extending substantially in the vehicle width direction with the center thereof substantially located at the vehicle center. Namely, the concave portion is formed locally at the vehicle roof. Also, there are provided at the rear hatch the shoulder portions located substantially at the same level or height as the base shape and the concave portion located substantially at the same level or height as the concave portion formed at the roof. Thus, another concave portion is also formed locally at the rear hatch. And, in order to reduce the air resistance coefficient Cd properly, the concave portion of the vehicle roof is formed so as to go substantially down rearward in such a manner that its height becomes lower from the front end portion thereof toward the rear end portion thereof. Further, there is provided the roof-rear-end air flow passage that extends longitudinally from the concave portion of the vehicle roof towards or to the concave portion of the rear hatch. Accordingly, the exterior design of the vehicle can be improved and also the smooth air flowing with the properly small air resistance can be provided.

According to an embodiment of the present invention, a spoiler portion is provided so as to extend at least partly over the concave portion of the rear hatch substantially in the vehicle width direction, and an air flowing down the roof-rear-end air flow passage passes through between the spoiler portion and the concave portion of the rear hatch. Accordingly, an airflow dynamics performance of the vehicle can be improved by the spoiler portion.

According to another embodiment of the present invention, the spoiler portion is provided so as to extend substantially at the same level or height as the shoulder portions. Thereby, the vehicle exterior design can be improved.

According to another embodiment of the present invention, a lower face of the spoiler portion and a bottom face of the concave portion of the rear hatch are configured to go substantially downward rearward. Accordingly, the roof-rear-end air flow passage that is formed with the lower face of the spoiler portion and the bottom face of the concave portion of the rear hatch goes down rearward, and thereby air flowing down the air passage can be directed (guided) downward substantially along the rear window pane. As a consequence, muddy water or the like can be prevented from staying on the rear widow pane and particularly making it dirty ans/or reducing the rearward visibility.

According to another embodiment of the present invention, the spoiler portion comprises a light source to emit lights substantially rearward therein or thereon. Accordingly, the spoiler portion preferably functions as a high-mount stop lamp that is located at or near the vehicle center in a properly viewable high position.

According to another embodiment of the present invention, the spoiler portion comprises a base portion to form a lower face of the spoiler portion and support the light source and a red transparent portion to form a rear face portion of the spoiler portion, and the light source emits lights rearward through the red transparent portion. Accordingly, the rear face of the spoiler portion is viewed as the red high-mount stop lamp, so its visibility can be further improved.

According to another embodiment of the present invention, the rear hatch is to be attached to a rain rail portion at a rear end of the vehicle roof via one or more, preferably a pair of hinges located outside the concave portion of the vehicle roof so as to be opened substantially upward, and a substantially vertical wall portion of the rain rail portion is formed substantially in a flat shape without a forward-projecting portion.

Namely, the substantially vertical wall portion is formed in the flat shape to go down substantially straightly from back of the vehicle end portion of the roof. Thus, a forward-projecting portion shape (so-called negative shape) of the vertical wall portion of the rain rail can be substantially eliminated, so forming of the vehicle roof can be facilitated, manufacturing process can be simplified and cost reduction can be achieved.

Namely, since the rear hatch comprises the shoulder portions and the concave portion that is located substantially at the same level or height as the concave portion of the roof, a rotational locus of the upper central end edge of the rear hatch at a rotational or pivotal movement of the rear hatch becomes smaller and thereby it can be properly avoided that the upper central end edge of the rear hatch interferes with the vertical wall portion of the rain rail. Thus, the forward-projecting shape of the vertical wall portion of the rain rail portion can be eliminated properly.

According to another embodiment of the present invention, an upper end of an intermediate portion (preferably substantially a central portion) of the concave portion of the rear hatch is positioned substantially at the same level or height as a hinge center of said hinges or at a lower level or height than that. Herein, the hinge center can be generally defined by an imaginary line connecting the center of the respective hinges. Thereby, the above-described rotational locus of the upper central end edge of the rear hatch can be made smaller surely, the forward-projecting shape of the vertical wall portion of the rain rail portion can be eliminated surely.

According to another embodiment of the present invention, the concave portion of the vehicle roof and the concave portion of the rear hatch are formed in a substantially U or V or W shape respectively, when viewed from back of the vehicle, such that their intermediate portions (preferably substantially center portions) are positioned at a lower level or height than their both sides. Accordingly, since the air passage is formed substantially continuously by these concave portions having the substantially U or V or W shape, a sufficient amount of air flowing down the air passage can be ensured.

According to another embodiment of the present invention, the slant wall portions are formed at boundaries between the concave portion of the vehicle roof and both side portions located outside the concave portion of the vehicle roof. Thereby, the air passage can be formed properly by the slat portions. And, since the difference-in-level portions also function as a bead, the roof rigidity and roof strength can be increased.

According to another embodiment of the present invention, the rear hatch comprises an outer panel made of synthetic resin and/or an inner panel made of synthetic resin. Thereby, forming of the shoulder portions and the concave portion of the rear hatch can be facilitated.

Other features, aspects, and advantages of the present invention will become apparent from the following description which refers to the accompanying drawings.
FIG. 1 is a side view of a hatch-back type of vehicle with a vehicle rear body structure according to the present invention.
FIG. 2 is a perspective view showing the vehicle rear body structure.
FIG. 3 is a sectional view taken along line A-A of FIG. 2.
FIG. 4 is a sectional view taken along line B-B of FIG. 2.
FIG. 5 is a partial enlarged plan view showing a major part of the vehicle rear body structure.
FIG. 6 is a back view showing the vehicle rear body structure.
FIG. 7 is a perspective view showing a spoiler portion in a detached state.
FIG. 8 is a perspective view showing disposition of LED.
FIG. 9 is an explanatory diagram showing an air flow state at a vehicle traveling.
FIG. 10 is a partial enlarged plan view showing another embodiment of the vehicle rear body structure.
FIG. 11 is a sectional view showing further another embodiment of the vehicle rear body structure.
FIG. 12 is a sectional view showing further another embodiment of the vehicle rear body structure.

Hereinafter, preferred embodiments of the present invention will be described referring to the accompanying drawings. It should be understood that even though embodiments are separately described, single features thereof may be combined to additional embodiments.

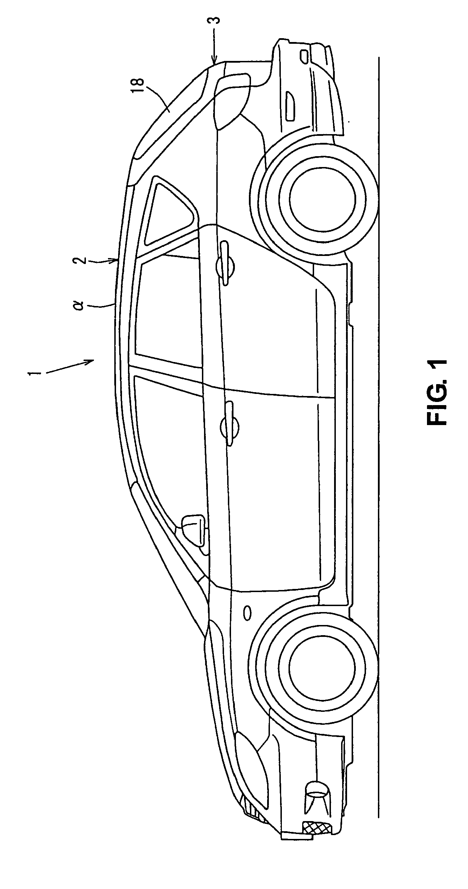

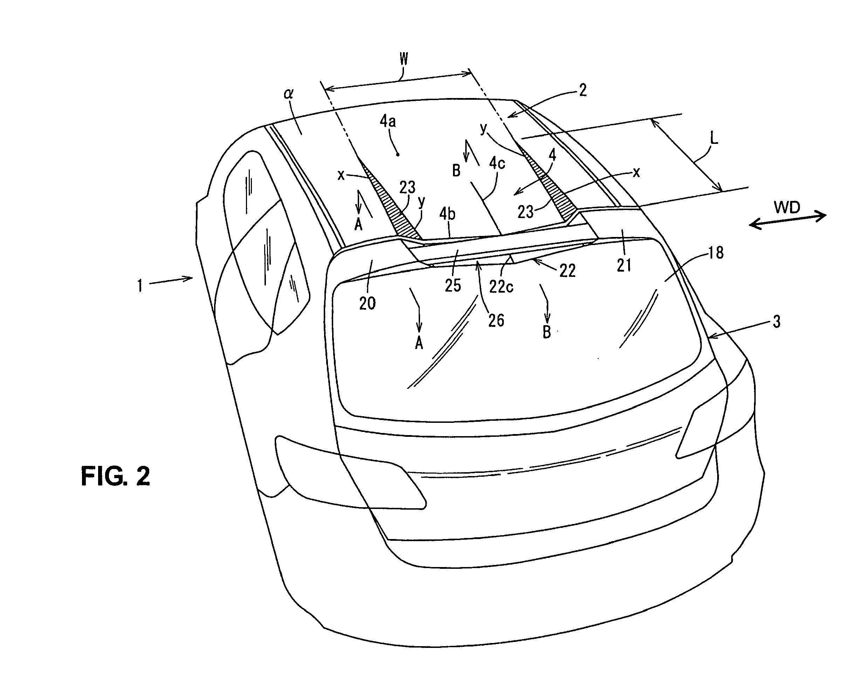

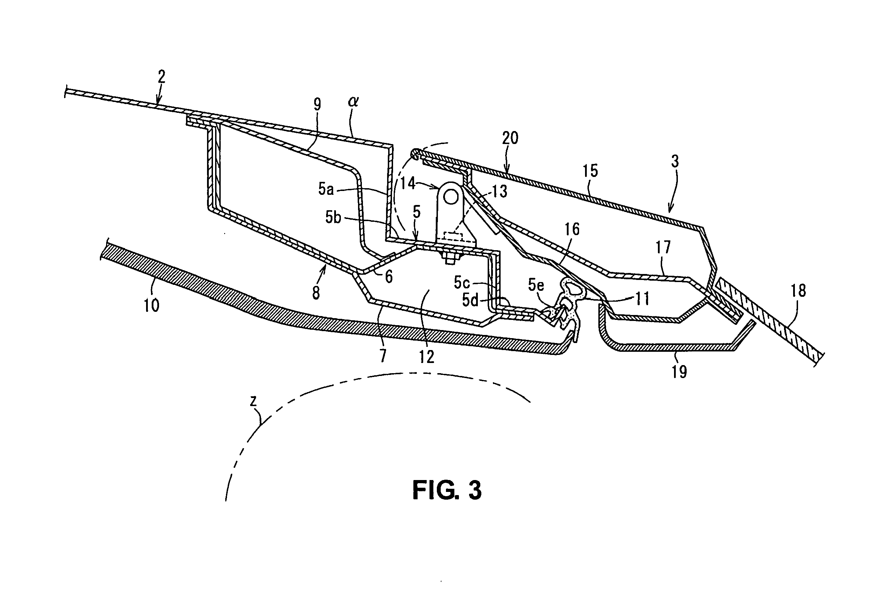

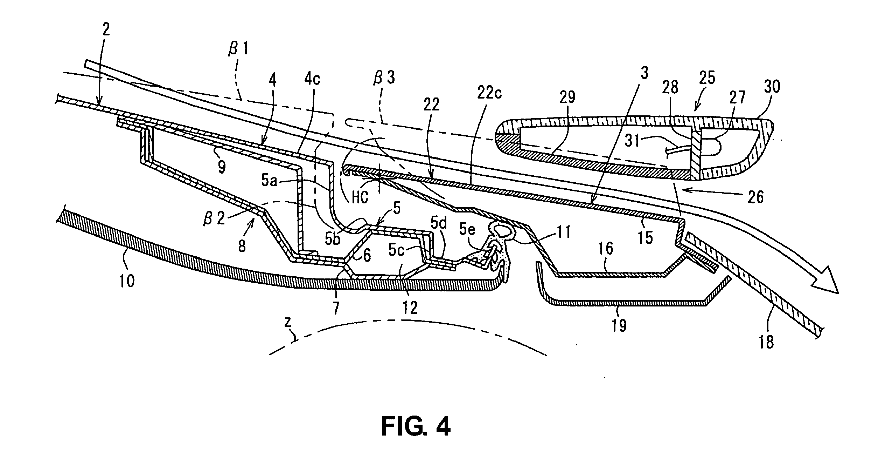

Figures illustrate a vehicle rear body structure. FIG. 1 is a side view of a hatch-back type of vehicle, FIG. 2 is a perspective view of a major part of the vehicle of FIG. 1 when viewed from back of the vehicle, FIG. 3 is a sectional view of a hinge attaching portion taken along line A-A of FIG. 2, and FIG. 4 is a sectional view of a vehicle central portion taken along line B-B of FIG. 2. In FIGS. 1 - 4, a hatch-back type of vehicle 1 has a rear hatch 3 that can be opened substantially upward at or near a rear end portion of a roof panel 2.

The roof panel 2 has a roof base shape α that is formed in a convex shape as shown in FIGS. 1 and 2. Namely, a widthwise intermediate (preferably substantially central) portion of the roof panel over at least part of its longitudinal extension, preferably over its substantially entire longitudinal direction or extension protrudes upward slightly so as to have a gentle arc shape when viewed from back of the vehicle.

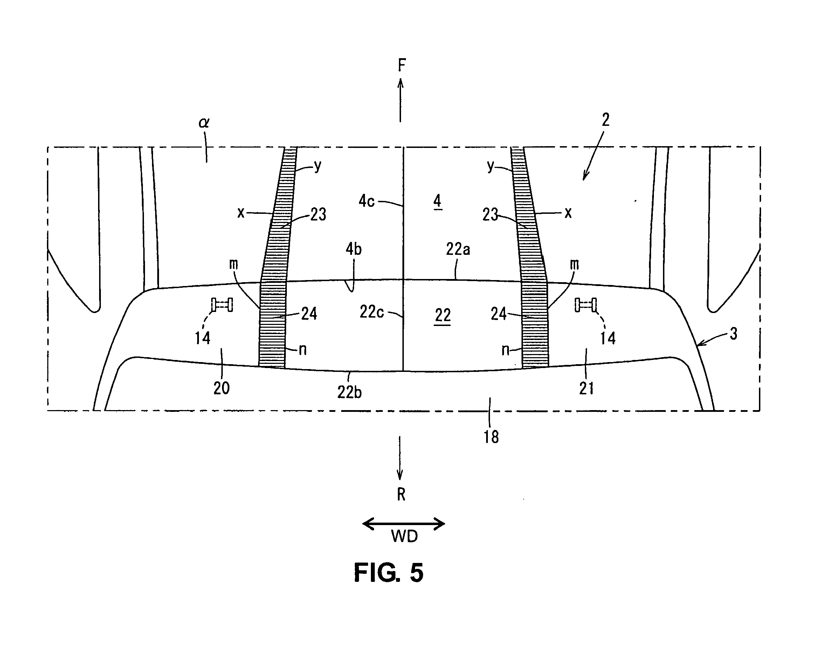

Further, the roof panel 2 has a concave or recessed portion 4 at or near a roof rear intermediate portion (preferably substantially a roof rear central portion) thereof as shown in FIG. 2. Namely, part of the roof panel 2 that is located at or near a rear portion and a widthwise intermediate portion (preferably substantially a central portion) of the roof panel 2, which is enclosed by a specified (predetermined or predeterminable) length L (for example, about 50 cm) extending forward from a rear end of the roof panel 2 and a specified (predetermined or predeterminable) width W extending substantially in width direction WD (preferably with its center substantially located at the vehicle center), is formed to be located at a lower level or height than the above-described roof base shape α. Herein, this part of the roof panel 2 is formed to be located between a pair of right and left hinges 14, 14 (see FIG. 5), which will be described below, in a vehicle width direction WD.

As shown in FIGS. 3 and 4, at the rear end portion of the roof panel 2 is formed a rain rail portion 5, which includes a substantially vertical wall portion 5a extending substantially downward from or at back of the vehicle end portion of the roof panel 2, a substantially horizontal portion 5b extending substantially horizontally rearward from or at a lower end of the vertical wall portion 5a, a substantially vertical wall portion 5c extending downward from or at a rear end of the horizontal portion 5b, a substantially horizontal portion 5d extending substantially horizontally rearward from or at a lower end of the vertical wall portion 5c, and an attaching portion 5e formed integrally or unitarily with the horizontal portion 5d for attaching a seal member.

A rear header 8 comprising a rear header outer panel 6 and a rear header inner panel 7 is attached at a lower face of the roof panel 2 and a lower face of the rain rail portion 5. And, a rear header reinforcement 9 is provided between a front portion of the rear header 8 that is joined to the roof panel 2 and a rear header outer panel 6 located near the lower end of the vertical wall portion 5a. These members 6, 7 and 9 form at least part of a rear body structure that can provide a proper rear rigidity of the roof panel 2.

Further, a trim member 10 (a so-called top sealing) is provided at least partly inside the roof panel 2 and the rear header 8, and a so-called weather strip 11 as a seal member is to be (directly or indirectly) attached or mounted to the attaching portion 5e of the rain rail member 5, thereby properly sealing between the rain rail portion 5 and the rear hatch 3, and between the attaching portion 5e and a rear end of the trim member 10.

A rear-header closed section 12 is formed at the rear header 8 so as to extend substantially in the vehicle width direction WD at or near the above-described horizontal portion 5b of the rain rail portion 5. A pair of lateral (right and left) hinges 14, 14 are attached via an attaching member 13, such as bolts and nuts, to the horizontal portion 5b and the rear header outer panel 6 at the rear-header closed section 12.

The rear hatch 3 is to be attached or mounted to the rain rail portion 5 at or near the rear end of the roof panel 2 via the one or more hinges 14, 14 preferably respectively located outside the above-described concave portion 4 at the roof rear central portion so as to be opened substantially upward.

The rear hatch 3, as shown in FIGS. 3 and 4, comprises an outer panel 15 (preferably made of synthetic resin), an inner panel 16 (preferably made of synthetic resin), a hinge reinforcement 17 (preferably made of steel plate) that is provided substantially between the panels 15, 16 only at the hinge attaching portion, and a rear window pane 18. A trim member 19 is to be provided at a specified (predetermined or predeterminable) portion at least partly inside the rear hatch 3.

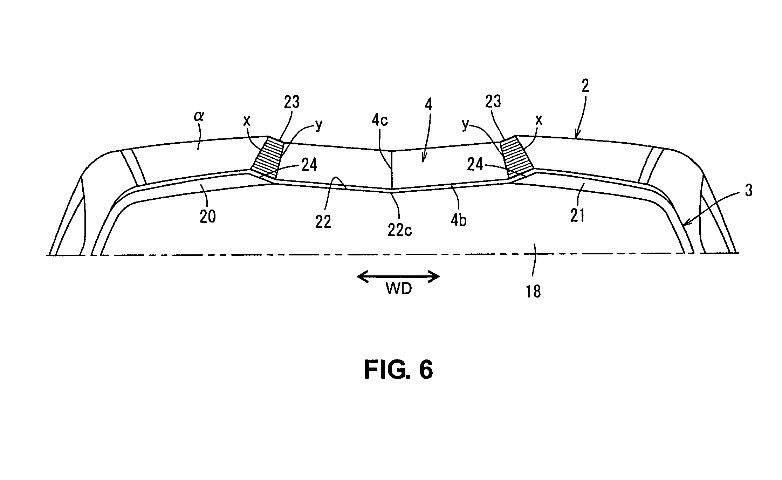

FIGS. 5 and 6 show a state in which the spoiler is detached, and FIG. 5 is an enlarged plan view of a major part and FIG. 6 is a back view of the major part of the vehicle 1. As shown in FIGS. 2, 5 and 6, an upper end portion of the rear hatch 3 comprises lateral (right and left) shoulder portions 20, 21 that preferably are located substantially at the same level or height as the base shape α of the rear end portion of the roof panel 2 in the closed state of the rear hatch 3 and a concave or recessed portion 22 that is formed at an intermediate portion (preferably substantially at a central portion) of the rear hatch 3 and preferably is located at a level or height lower than the shoulder portions 20, 21 and/or substantially at the same level or height as the above-described concave portion 4 formed at the roof rear intermediate (central) portion in the closed state of the rear hatch 3. Thus, a rotational locus of the upper central end edge of the rear hatch 3 at the rotational movement of the rear hatch 3 is configured so as to be smaller, so a forward-projecting shape (see a conventional concave shape β2 shown by broken lines) of the vertical wall portion 5a of the rain rail portion 5 can be eliminated as shown in FIG. 4.

Herein, an upper end of the central portion 22c of the concave portion 22 formed at the rear hatch 3 preferably is positioned substantially at the same level or height as a hinge center H of the hinges 14 or at a lower level or height as shown in FIG. 4 (herein, the figure shows a case where it is positioned substantially at the same level or height as the hinge center H).

Herein, a structure of the above-described concave portion 4 formed at the roof rear central portion will be described in detail. This concave portion 4 is configured, as shown in FIGS. 2, 4 and 6, such that its height becomes gradually lower from a front end portion 4a that preferably is positioned at the substantially same level or height as the roof base shape α toward a rear end portion 4b. In other words, a depth of the concave portion 4 becomes gradually deeper from the font end portion 4a toward the rear end portion 4b. Thus, the concave portion 4 is formed so as to go down gradually from the level or height of the roof base shape α toward the rear. Thereby, there is provided a roof-rear-end air flow passage 26 (hereinafter, referred to as air flow passage 26) that extends longitudinally substantially from the concave portion 4 formed at the roof rear central portion to the concave portion 22 formed at the rear hatch. Herein, an angle of the concave portion 4 going down preferably is set to be less than about 15 degrees, more preferably approximately 10 degrees for reducing the air resistance coefficient Cd properly.

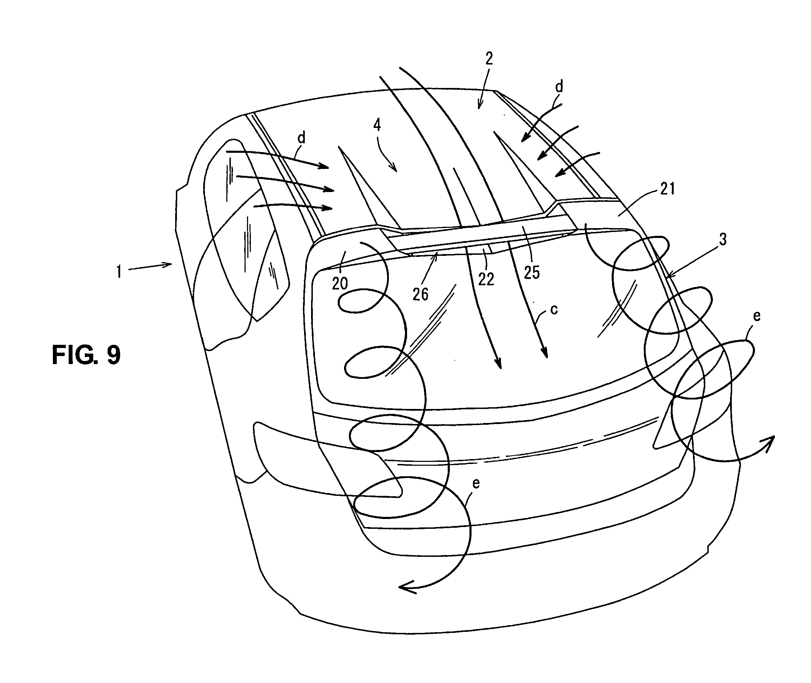

Also, there are provided difference-in-level portions 23 that are formed as slant wall portions at boundaries x between the concave portion 4 and both side portions located outside the concave portion 4. The difference-in-level portions 23 extend substantially longitudinally such that their height of the difference in level or height becomes gradually greater from their front ends toward their rear ends, and formed in a slant shape as a whole as shown in FIGS. 2 and 6. These difference-in-level portions 23 preferably function as a bead to reinforce a roof rigidity of the roof panel 2 and as a structure to enhance a central flow C that is described below (see FIG. 9).

Further, the concave portion 4 preferably is formed in a substantially V or U or W shape, when viewed from back of the vehicle 1, such that its center portion 4c preferably is positioned at a lower level or height than its both sides. In the present embodiment, the center portion 4c of the concave portion 4 is positioned at a lower level or height than a low edge portion y of the difference-in-level portions 23.

The above-described concave portion 22 formed at the rear hatch 3, which preferably is positioned substantially at the same level or height as the rear end of the concave portion 4 formed at the roof rear central portion, is configured as follows. Namely, this concave portion 22 is formed at the intermediate (preferably substantially central) portion on the upper end of the rear hatch 3, and its height preferably is configured to become gradually lower from its front end portion 22a toward its rear end portion 22b as shown in FIGS. 2, 4, 5, 6 and 7.

Also, there are provided difference-in-level portions 24 that are formed in a slant shape at boundaries m at the both-side shoulder portion 20, 21. Further, the concave portion 22 is formed in a substantially V or U or W shape, when viewed from back of the vehicle, such that its center portion 22c is positioned at a lower level or height than its both sides. In the present embodiment, the center portion 22c of the concave portion 22 is positioned at a lower level or height than a low edge portion n of the difference-in-level portions 24.

Herein, like the concave portion 4, the concave portion 22 is configured to go down backward with a specified (predetermined or predeterminable) angle, and this going-down angle preferably is set to be less than about 15 degrees, more preferably approximately 10 degrees for reducing the air resistance coefficient Cd properly. Namely, both concave portions, the concave portion 4 formed at the roof rear central portion of the roof panel 2 and the concave portion 22 formed at the top end of the rear hatch 3, preferably are formed so as to substantially extend longitudinally continuously when the rear hatch 3 is in the closed state.

Further, a rear spoiler 25 (that preferably is formed substantially in a plate shape) is provided so as to extend at least partly over the concave portion 22 substantially in the vehicle width direction WD as shown in FIGS. 2, 4 and 7. Both side ends of the rear spoiler 25 are to be fixed or mounted to the upper end of the rear hatch 3, and the air flowing down the above-described air flow passage 26 passes through between the rear spoiler 25 and the concave portion 22. An image of the air flow is illustrated by an arrow in FIG. 4.

The rear spoiler 25, as shown in FIG. 2, preferably extends laterally substantially at the same level or height as the shoulder portions 20, 21. And, the rear spoiler 25, as shown in the sectional view of FIG. 4, comprises at least one LED 27 as a preferred light source to emit lights substantially rearward, a base plate 28 (LED base plate), a housing 29 as a base portion to form a lower face of the rear spoiler 25 and support the LED(s) 27 via the base plate 28, and an outer lens 30 as a red transparent portion to form at least part of an upper portion and a rear face portion of the rear spoiler 25. Thus, the rear spoiler 25 can also function as the high-mount stop lamp that emits lights of the LED(s) 27 substantially rearward through the outer lens 30.

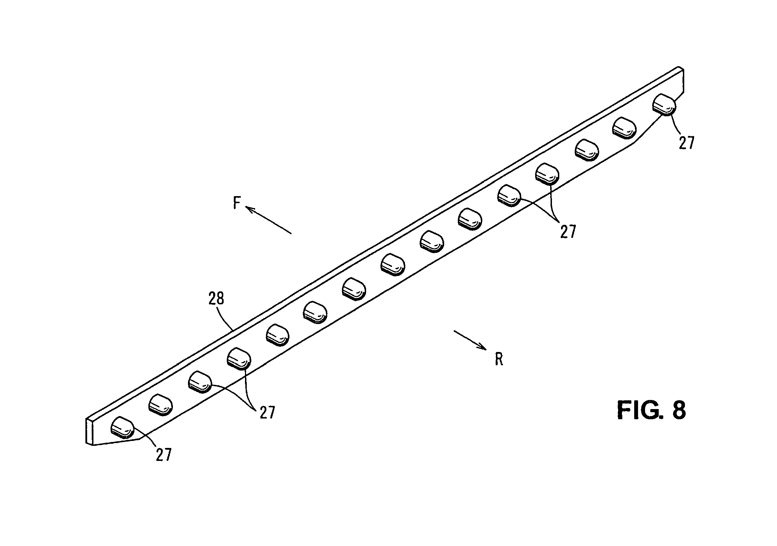

Herein, the LED 27 is comprised of plural elements that are provided at the base plate 28 in line as shown in shown in FIG. 8, and the base plate 28 and the LED 27 are at least partly accommodated inside the rear spoiler 25.

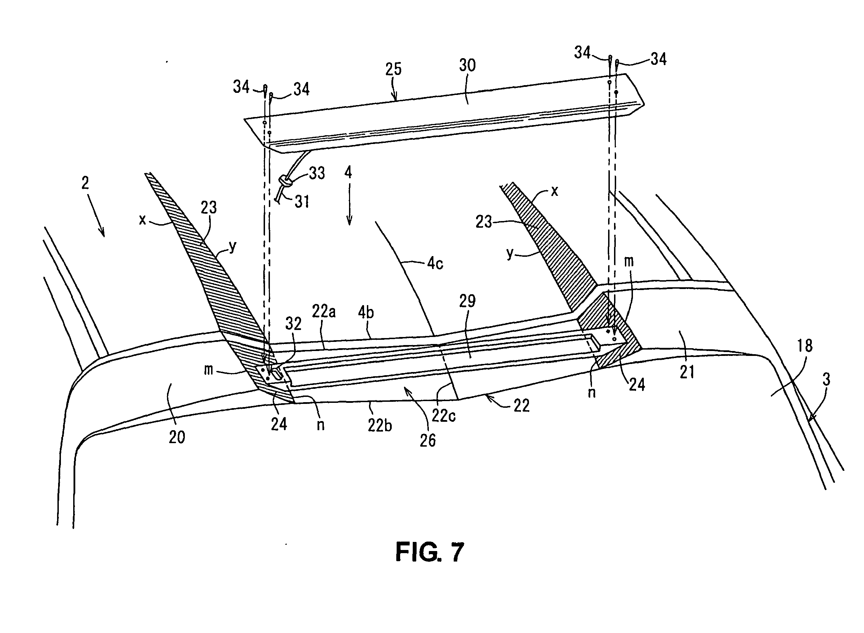

As shown in FIG. 7, the housing 29 of the rear spoiler 25 is formed integrally or unitarily with the outer panel 15 of the rear hatch 3. A harness 31 for the LED 27 is to be provided via a hole 32 formed at the hosing 29 on a side of the rear hatch 3 as shown in FIG. 7, and the hole 32 is substantially covered with a harness grommet 33. The outer lens 30 is to be attached via one or more members 34 such as screws to the housing 29 and the difference-in-level portions 24 of the concave portions 22, namely at the top end of the rear hatch 3.

The lower face of the rear spoiler 25 and the bottom face of the concave portion 22 formed at the rear hatch are configured to go substantially downward rearward as shown in FIG. 4.

Herein, instead of the unitary- or integral-forming structure of the housing 29 and the outer panel 15 of the rear hatch 3, the rear spoiler 25 comprised of parts 27 - 30 may be assembled in advance and then the assembled rear spoiler 25 may be attached to the difference-in-level portions 24 of the concave portions 22 formed at the rear hatch 3.

In figures an arrow F denotes the vehicle front direction, and an arrow R denotes the vehicle rear direction. In FIGS. 3 and 4 a head of a rear passenger is shown schematically with a broken line Z. In order to show comparatively the present embodiment and a conventional structure, a roof panel β1, a concave-shape vertical wall portion β2 of the rain rail, and a rear hatch β3 according to the conventional structure are also shown with broken lines in FIG. 4.

In general, when the vehicle 1 travels, the air flow is formed so as to gather to the roof center as shown by arrows d in FIG. 9 due to the roof's round shape in a back view. And, a central air flow that has gone down the roof rear end portion tends to be directed outward due to the arc shape of the roof rear end in a plan view, and thereby vortex air flows are formed behind both roof rear sides of the vehicle (see arrows e in FIG. 9). Herein, according to the above-described vehicle rear body structure, the intermediate or substantially central air flow c can be strengthened by the concave portion 4 and the concave portion 22. Thereby, the above-described air flow directed outward can be suppressed properly. Thus, the vortex air flows e is weakened, so the air resistance coefficient Cd can be reduced properly.

As described above, the vehicle rear body structure of a hatch-back type of vehicle of the present embodiment comprises the vehicle roof (roof panel 2) having the roof base shape α that is formed in the convex shape, whose intermediate (preferably substantially central) part protrudes substantially upward slightly over at least part of the longitudinal extension, preferably over the substantially entire longitudinal direction or extension thereof so as to have the gentle arc shape when viewed from back of the vehicle 1, the concave portion 4 formed at or near the rear intermediate (preferably substantially central) portion of the vehicle roof (roof panel 2), the concave portion 4 being disposed so as to be enclosed by the specified (predetermined or predeterminable) length L extending forward from back of the vehicle end of the vehicle roof and the specified width W extending in the vehicle width direction WD with the intermediate portion (preferably the substantially center) thereof substantially located at the vehicle center, the concave portion being located at the lower level or height than the roof base shape α, and the rear hatch 3 provided so as to be opened and closed, whose upper end portion having lateral (right and left) shoulder portions 20, 21 that preferably are located substantially at the same level or height as the base shape α of the rear end portion of the vehicle roof in the closed state and the concave portion 22 that is formed at the intermediate (preferably substantially central) portion and is located at the level or height lower than the shoulder portions 20, 21 and/or substantially at the same level or height as the concave portion 4 formed at the vehicle roof rear intermediate (central) portion of the vehicle roof in the closed state thereof, wherein the concave portion 4 of the vehicle roof is formed so as to go down rearward in such a manner that its height becomes lower from the front end portion toward the rear end portion, and there is provided the roof-rear-end air flow passage 26 that extends substantially longitudinally from the concave portion 4 of the vehicle roof to the concave portion 22 of the rear hatch 3.

According to the above-described structure, the concave portion 4 of the vehicle roof (roof panel 2) is disposed so as to be enclosed by the specified (predetermined or predeterminable) length L extending forward from back of the vehicle end of the vehicle roof and the specified width W extending in the vehicle width direction WD with the center thereof substantially located at the vehicle center. Namely, the concave portion 4 is formed locally at the vehicle roof. Also, there are provided at the rear hatch 3 the shoulder portions 20, 21 preferably located substantially at the same level or height as the base shape α and/or the concave portion 22 preferably located substantially at the same level or height as the concave portion 4. The concave portion 22 is also formed locally at the rear hatch 3. And, in order to reduce the air resistance coefficient Cd properly, the concave portion 4 of the vehicle roof is formed so as to go down rearward in such a manner that its height becomes lower from the front end portion toward the rear end portion. Further, there is provided the roof-rear-end air flow passage 26 that extends longitudinally from the concave portion 4 of the vehicle roof towards or to the concave portion 22 of the rear hatch 3. Accordingly, an exterior design of the vehicle 1 can be improved and also a smooth air flowing with a smaller air resistance can be provided by the both concave portions 4, 22.

Further, the spoiler portion (rear spoiler 25) is provided so as to extend at least partly over the concave portion 22 of the rear hatch 3 substantially in the vehicle width direction WD, and the air flowing down the roof-rear-end air flow passage 26 passes through between the spoiler portion (rear spoiler 25) and the concave portion 22 of the rear hatch 3. Accordingly, the airflow dynamics performance of the vehicle 1 can be improved by the spoiler portion (rear spoiler 25).

Also, the spoiler portion (rear spoiler 25) is preferably provided so as to extend substantially at the same level or height as the shoulder portions 20, 21 of the rear hatch 3. Thereby, the vehicle exterior design can be improved while having good aerodynamic properties.

Herein, the lower face of the rear spoiler 25 and the bottom face of the concave portion 22 of the rear hatch preferably are configured to go downward rearward. Accordingly, the roof-rear-end air flow passage 26 that is formed by the lower face of the rear spoiler 25 and the bottom face of the concave portion 22 of the rear hatch goes down rearward, and thereby air flowing down the air passage 26 can be directed (guided) downward along the rear window pane 18. As a consequence, muddy water or the like can be prevented properly from staying on the rear widow pane 18 and particularly making it dirty.

Also, the rear spoiler 25 preferably comprises the light source (LED(s) 27) to emit lights substantially rearward. Accordingly, the rear spoiler 25 preferably functions as the high-mount stop lamp that is located at or near the vehicle center in a properly viewable high position.

The rear spoiler 25 preferably comprises the base portion (housing 29) to form the lower face of the rear spoiler 25 and support the light source (LED(s) 27) and the red transparent portion (outer lens 30) to form the rear face portion of the rear spoiler 25, and the light source (LED(s) 27) emits lights substantially rearward through the red transparent portion (outer lens 30). Accordingly, the rear face of the rear spoiler 25 is viewed as the red high-mount stop lamp, so its visibility can be improved. Herein, in the case where the outer lens 30 is configured so as to at least partly cover the upper face and the rear face of the rear spoiler 5 integrally like the present embodiment, the whole rear spoiler 25 is viewable as the high-mount stop lamp. Thus, its visibility can be further improved.

The rear hatch 3 is attached to the rain rail portion 5 at the rear end of the vehicle roof via a pair of hinges 14, 14 located outside the concave portion 4 of the vehicle roof so as to be opened upward, and the vertical wall portion 5a of the rain rail portion 5 is formed substantially in a flat shape without a forward-projecting portion. Namely, the vertical wall portion 5a is formed in the flat shape to go down straightly from back of the vehicle end portion of the roof (roof panel 2). Thus, a forward-projecting portion shape (so-called negative shape) of the vertical wall portion 5a of the rain rail 5 can be eliminated, so forming of the roof panel 2 can be facilitated, a manufacturing process can be simplified and a cost reduction can be properly achieved.

Namely, since the rear hatch 3 comprises the shoulder portions 20, 21 and the concave portion 22 that preferably is located substantially at the same level or height as the concave portion 4 of the roof, the rotational locus of the central upper-end edge of the rear hatch 3 at the pivotal or rotational movement of the rear hatch 3 becomes small and thereby it can be avoided that the central upper-end edge of the rear hatch 3 interferes with the vertical wall portion 5a of the rain rail 5. Thus, the forward-projecting shape of the vertical wall portion 5a of the rain rail portion 5 can be eliminated.

The upper end of the central portion of the concave portion 22 of the rear hatch is positioned substantially at the same level or height as the hinge center HC of the hinge 14 or at the lower level or height than that. Herein, the hinge center HC is defined by an imaginary line connecting the center of the respective hinges 14, 14. Thereby, the above-described rotational locus of the upper central end edge of the rear hatch 3 can be made smaller surely, the forward-projecting shape β2 (see the broken line in FIG. 4) of the vertical wall portion 5a of the rain rail portion 5 can be eliminated surely.

The concave portion 4 of the vehicle roof and the concave portion 22 of the rear hatch preferably are formed in the substantially U or V or W shape respectively, when viewed from back of the vehicle, such that their center portions are positioned at the lower level or height than their both sides. Accordingly, since the air passage 26 is formed continuously by these concave portions 4, 22 having the substantially U or V or W shape, the sufficient amount of air flowing down the air passage 26 can be ensured, so that the central flow C shown in FIG. 9 can be further enhanced.

Further, the difference-in-level portions 23 formed as slant wall portions preferably are provided at boundaries x between the concave portion 4 of the vehicle roof and both side portions located outside the concave portion 4 of the vehicle roof. Thereby, the air passage 26 can be formed properly by the slat portions (difference-in-level portions 23). And, since the difference-in-level portions 23 function as the bead, the roof rigidity and roof strength can be increased.

Herein, the rear hatch 3 comprises the outer panel 15 preferably made of synthetic resin and/or the inner panel 16 preferably made of synthetic resin. Thereby, forming of the shoulder portions 20, 21 and the concave portion 22 of the rear hatch 3 can be facilitated.

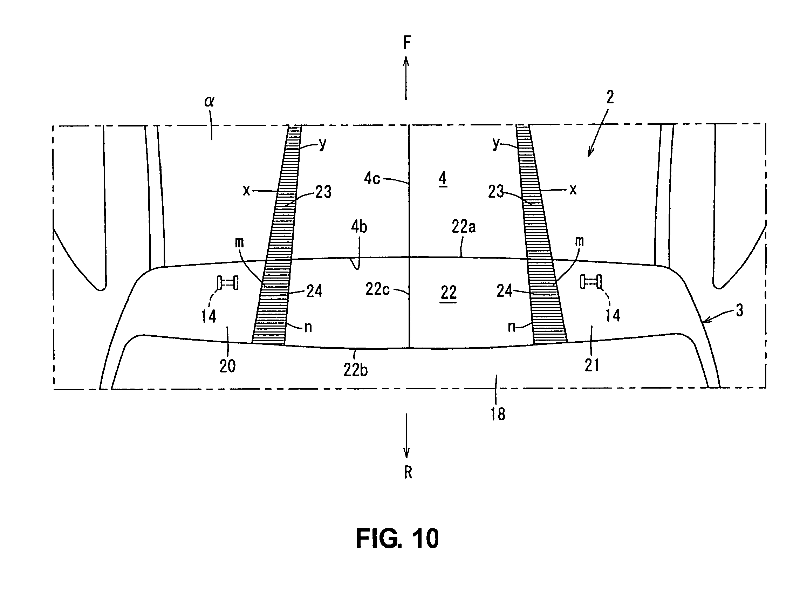

FIG. 10 is a partial enlarged plan view showing another embodiment of the vehicle rear body structure, in which the rear spoiler is removed. In the above-described embodiment shown in FIG. 5, the boundaries m, m of the concave portion 22 of the rear hatch are formed substantially in parallel to each other. In this embodiment shown in FIG. 10, however, the concave portion 22 and the difference-in-level portions 24, 24 at the rear hatch are formed to be located on an extension line of the concave portion 4 and the difference-in-level portions 23, 23 at the roof, and the distance between the boundaries m, m at the rear end of the concave portion 22 preferably is substantially larger than that between the boundaries m, m at the front end of the concave portion 22.

The present embodiment provides substantially the same function and effect as those of the above-described embodiment shown in FIGS. 1 - 9. The same or similar portions as the above-described embodiment are denoted by the same reference characters in FIG. 10 and detailed descriptions of those are omitted here.

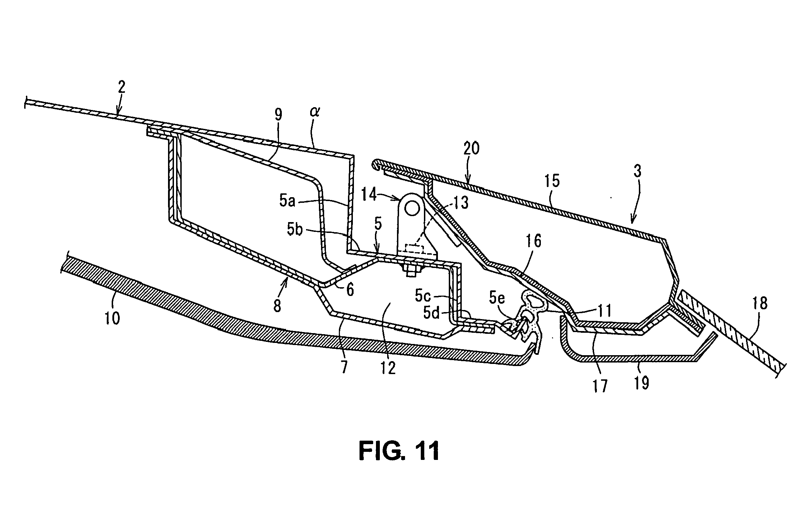

FIG. 11 is a sectional view showing further another embodiment of the vehicle rear body structure. In the above-described embodiment shown in FIG. 3, the steel-plate hinge reinforcement 17 is provided between the synthetic-resin outer and inner panels 15, 16 only at the attaching portion of the hinges 14. In this embodiment shown in FIG. 11, however, the steel-plate hinge reinforcement 17 is provided at a lower face of the inner panel 16.

Likewise, the present embodiment provides substantially the same function and effect as those of the above-described embodiment shown in FIGS. 1 - 9. The same or similar portions as the above-described embodiment are denoted by the same reference characters in FIG. 11 and detailed descriptions of those are omitted here.

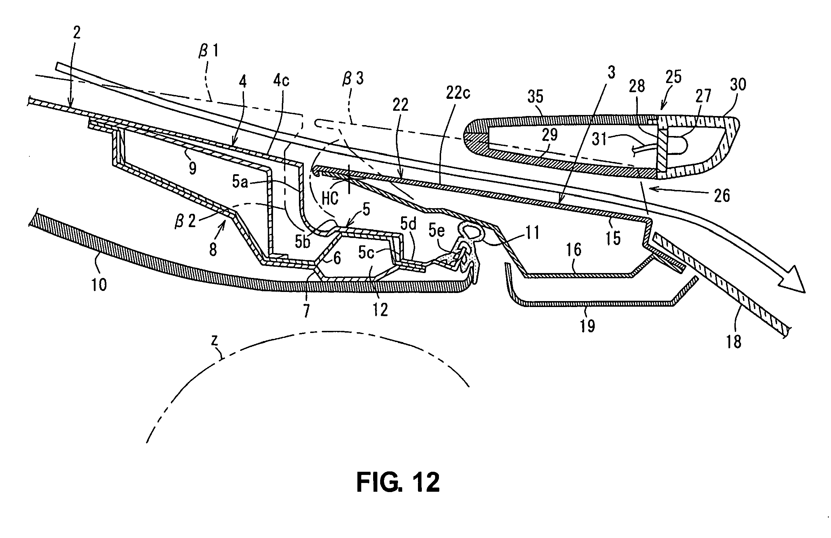

FIG. 12 is a sectional view showing further another embodiment of the vehicle rear body structure. In the above-described embodiment shown in FIG. 4, the outer lens 30 as the red transparent portion is provided so as to constitute the upper portion and the rear face portion of the rear spoiler 25 in such a manner the rear spoiler 25 can be viewed as the red high-mount stop lamp itself as a whole. In this embodiment shown in FIG. 12, however, part of the rear upper face portion and the rear face portion is comprised by the outer lens 30 and most part of the upper face portion is comprised of an upper face plate 35 made of synthetic resin.

Thereby, the high-mount stop lamp can be located at or near the vehicle center in the properly viewable high position. Likewise, the present embodiment shown in FIG. 12 provides substantially the same function and effect as those of the above-described embodiment. The same or similar portions as the above-described embodiment are denoted by the same reference characters in FIG. 12 and detailed descriptions of those are omitted here.

In preferred relationships between the present invention and the embodiments described above, the vehicle roof corresponds to the roof panel 2, the roof-rear-end air flow passage corresponds to the air passage 26, the spoiler portion corresponds to the rear spoiler 25, the slant wall portion corresponds to the difference-in-level portion 23, the rear window corresponds to the rear window pane 18, the concave portion that formed at the rear hatch corresponds to the concave portion 22, the light source corresponds to the LED(s) 27, the base portion corresponds to the hosing 29, and the red transparent portion corresponds to the outer lens 30.

The present invention should not be limited to the above-described embodiments, and any other modifications and improvements may be applied within the scope of a sprit of the present invention as defined in the enclosed claims.

## Claims

1. A vehicle rear body structure of a hatch-back type of vehicle (1), comprising:
a vehicle roof (2) having a roof base shape (α) that is formed substantially in a convex shape;
at least one concave portion (4) formed at a roof rear intermediate portion of said vehicle roof (2), the concave portion (4) being disposed so as to be enclosed by a specified length (L) extending forward from a rear end of the vehicle roof and a specified width (W) extending in a vehicle width direction (WD), the concave portion (4) being located at a lower level than the roof base shape (α);
a rear hatch (3) provided so as to be opened and closed, whose upper end portion having right and left shoulder portions (20, 21) that are located substantially at the same level as the base shape (α) of a rear end portion of said vehicle roof (2) in a closed state thereof and a concave portion (22) that is formed at an intermediate portion thereof and is located at a level lower than the shoulder portions (20, 21) and/or substantially at the same level as said concave portion (4) formed at the vehicle roof rear intermediate portion of the vehicle roof (2) in the closed state thereof,
wherein said concave portion (4) of the vehicle roof (2) is formed so as to go down rearward in such a manner that its height becomes lower from a front end portion thereof toward a rear end portion thereof, and there is provided a roof-rear-end air flow passage (26) that extends longitudinally from said concave portion (2) of the vehicle roof to said concave portion (22) of the rear hatch (3).

2. The vehicle rear body structure of claim 1, wherein a spoiler portion (25) is provided so as to extend at least partly over said concave portion (22) of the rear hatch (3) substantially in the vehicle width direction (WD), and an air (c) flowing down said roof-rear-end air flow passage (26) passes through between the spoiler portion (25) and the concave portion (22) of the rear hatch (3).

3. The vehicle rear body structure of claim 2, wherein the spoiler portion (25) is provided so as to extend substantially at the same level as said shoulder portions (20,21).

4. The vehicle rear body structure of any one of the preceding claims, wherein a lower face of said spoiler portion (25) and a bottom face of said concave portion (22) of the rear hatch (3) are configured to go substantially downward rearward.

5. The vehicle rear body structure of any one of the preceding claims, wherein said spoiler portion (25) comprises a light source (27) to emit lights substantially rearward therein or thereon.

6. The vehicle rear body structure of claim 5, wherein said spoiler portion (25) comprises a base portion (29) to form a lower face of the spoiler portion (25) and support said light source (27) and a red transparent portion (30) to form a rear face portion of the spoiler portion (25), and said light source (27) emits lights rearward through the red transparent portion (30).

7. The vehicle rear body structure of any one of the preceding claims, wherein said rear hatch (3) is to be attached to a rain rail portion (5) at a rear end of the vehicle roof via one or more hinges (14, 14) located outside said concave portion (4) of the vehicle roof (2) so as to be opened upward, and a vertical wall portion (5a) of the rain rail portion (5) is formed substantially in a flat shape substantially without a forward-projecting portion.

8. The vehicle rear body structure of claim 7, wherein an upper end of an intermediate portion (22c) of the concave portion (22) of the rear hatch (3) is positioned substantially at the same level as a hinge center (HC) of said hinges (14, 14) or at a lower level than that.

9. The vehicle rear body structure of any one of the preceding claims, wherein said concave portion (4) of the vehicle roof (2) and said concave portion (22) of the rear hatch (3) are formed in a substantially U or V or W shape respectively, when viewed from back of the vehicle (1), such that their intermediate portions (4c, 22c) are positioned at a lower level than their both sides.

10. The vehicle rear body structure of any one of the preceding claims, wherein slant wall portions (23, 23) are formed at boundaries (x, x) between said concave portion (4) of the vehicle roof (2) and both side portions located outside the concave portion (4) of the vehicle roof (3).

11. The vehicle rear body structure of any one of the preceding claims, wherein said rear hatch (3) comprises an outer panel (15) made of synthetic resin and/or an inner panel (16) made of synthetic resin.
